# EUROPEAN PATENT APPLICATION

(11) **EP 4 560 665 A1**
(43) Date of publication of application: **28.05.2025**
(21) Application number: 24208654.4
(22) Date of filing: 24.10.2024
(51) Int. Cl.: H01G 4/12, H01G 4/30, C04B 35/468, H01G 4/012, H01G 4/008

(54) **MULTILAYER CERAMIC CAPACITOR**

(30) Priority: 21.11.2023 KR 20230162208
(71) Applicant: Samsung Electro-Mechanics Co., Ltd., Suwon-si, Gyeonggi-do (KR)
(72) Inventor: Park, Jeong Yun, Suwon-si, Gyeonggi-do (KR); Park, Il Jeong, Suwon-si, Gyeonggi-do (KR); Jin, Hye Jin, Suwon-si, Gyeonggi-do (KR); Kim, Hyoung Uk, Suwon-si, Gyeonggi-do (KR); Kwon, Hyung Soon, Suwon-si, Gyeonggi-do (KR)
(74) Representative: Grünecker Patent- und Rechtsanwälte PartG mbB

(57) **Abstract**

A multilayer electronic component includes a body including a dielectric layer and an internal electrode; and an external electrode disposed on the body, wherein the dielectric layer includes acceptor elements including vanadium (V), donor elements including rare earth elements, and titanium (Ti), and wherein, when the number of moles of the acceptor elements per 100 moles of titanium (Ti) is defined as Am, the number of moles of the donor elements per 100 moles of titanium (Ti) is defined as Dm, and the number of moles of vanadium (V) based on per of titanium (Ti) is defined as Vm, 1.2 ≤ Dm/Am ≤ 1.4 and 0.2 ≤ Vm/Dm is satisfied.

## Description

### CROSS-REFERENCE TO RELATED APPLICATION(S)

This application claims the benefit of priority to Korean Patent Application No. 10-2023-0162208 filed on November 21, 2023 in the Korean Intellectual Property Office, the disclosure of which is incorporated herein by reference in its entirety.

### TECHNICAL FIELD

The present disclosure relates to a multilayer electronic component.

### BACKGROUND

A multilayer ceramic capacitor (MLCC), a multilayer electronic component, may be a chip condenser mounted on the printed circuit boards of various electronic products including as image display devices such as a liquid crystal display (LCD) and a plasma display panel (PDP), a computer, a smartphone, a mobile phone, or the like, and charging or discharging electricity therein or therefrom.

Such a multilayer ceramic capacitor may be used as a component of various electronic devices, since a multilayer ceramic capacitor may have a small size and high capacitance and may be easily mounted. As various electronic devices such as a computer and a mobile device have been designed to have a smaller size and higher output, the demand for miniaturization and higher capacitance of a multilayer ceramic capacitors has increased.

The "deterioration" mechanism, directly related to harsh reliability of a multilayer ceramic capacitor may be affected by the movement of oxygen vacancy. To prevent the deterioration, research to prevent insulation resistance degradation under the high-512 temperature environment by reducing the concentration of oxygen vacancies has been actively conducted. To reduce insulation resistance degradation, reliability of multilayer ceramic capacitor may be improved by implementing a microstructure such as core-shell structure grains including a predetermined percentage of rare earth elements. When rare earth elements are added excessively, temperature characteristics (TCC properties) of the multilayer ceramic capacitor may deteriorate, and thus, it may be necessary to add rare earth elements in an appropriate content.

### SUMMARY

An embodiment of the present disclosure is to provide a multilayer electronic component satisfying X5R properties(TCC properties).

An embodiment of the present disclosure is to provide a multilayer electronic component having improved reliability.

According to an embodiment of the present disclosure, a multilayer electronic component includes a body including a dielectric layer and an internal electrode; and an external electrode disposed on the body, wherein the dielectric layer includes acceptor elements including vanadium (V), donor elements including rare earth elements, and titanium (Ti), and wherein, when the number of moles of the acceptor elements per 100 moles of titanium (Ti) is defined as Am, the number of moles of the donor elements per 100 moles of titanium (Ti) is defined as Dm, and the number of moles of vanadium (V) per 100 moles of titanium (Ti) is defined as Vm, 1.2 ≤ Dm/Am ≤ 1.4 and 0.2 ≤ Vm/Dm is satisfied.

### BRIEF DESCRIPTION OF DRAWINGS

The above and other aspects, features, and advantages of the present disclosure will be more clearly understood from the following detailed description, taken in combination with the accompanying drawings, in which:
FIG. 1 is a perspective diagram illustrating a multilayer electronic component according to an embodiment of the present disclosure;
FIG. 2 is an exploded perspective diagram illustrating a lamination structure of an internal electrode according to an embodiment of the present disclosure;
FIG. 3 is a cross-sectional diagram taken along line I-I' in FIG. 1;
FIG. 4 is a cross-sectional diagram taken along line II-II' in FIG. 1;
FIG. 5 is an enlarged diagram illustrating region P in FIG. 3;
FIG. 6A is a graph of reliability evaluation (HALT) of an example;
FIG. 6B is a graph of reliability evaluation (HALT) of a comparative example;
FIG. 6C is a graph of TCC properties of an example and a comparative example;
FIG. 7A is an image of dysprosium (Dy) in a cross-section of a dielectric layer of a comparative example, observed by using TEM-EDS;
FIG. 7B is an image of dysprosium (Dy) in a cross-section of a dielectric layer of another comparative example, observed by using TEM-EDS; and
FIG. 7C is an image of dysprosium (Dy) in a cross-section of a dielectric layer of an example, observed by using TEM-EDS.

### DETAILED DESCRIPTION

Hereinafter, embodiments of the present disclosure will be described as below with reference to the accompanying drawings.

These embodiments are described in sufficient detail to enable those skilled in the art to practice the invention. It is to be understood that the various embodiments of the invention, although different, are not necessarily mutually exclusive. For example, structures, shapes, and sizes described as examples in embodiments in the present disclosure may be implemented in another embodiment without departing from the spirit and scope of the present disclosure. Further, modifications of positions or arrangements of elements in embodiments may be made without departing from the spirit and scope of the present disclosure. The following detailed description is, accordingly, not to be taken in a limiting sense, and the scope of the present disclosure are defined only by appended claims, appropriately interpreted, along with the full range of equivalents to which the claims are entitled.

In the drawings, same elements will be indicated by same reference numerals. Also, redundant descriptions and detailed descriptions of known functions and elements which may unnecessarily make the gist of the present disclosure obscure will be omitted. In the accompanying drawings, some elements may be exaggerated, omitted or briefly illustrated, and the sizes of the elements do not necessarily reflect the actual sizes of these elements. The terms, "include," "comprise," "is configured to," or the like of the description are used to indicate the presence of features, numbers, steps, operations, elements, portions or combination thereof, and do not exclude the possibilities of combination or addition of one or more features, numbers, steps, operations, elements, portions or combination thereof.

In the drawings, the first direction may be defined as a lamination direction or a thickness (T) direction, the second direction may be defined as a length (L) direction, and the third direction may be defined as a width (W) direction.

### Multilayer Electronic Component

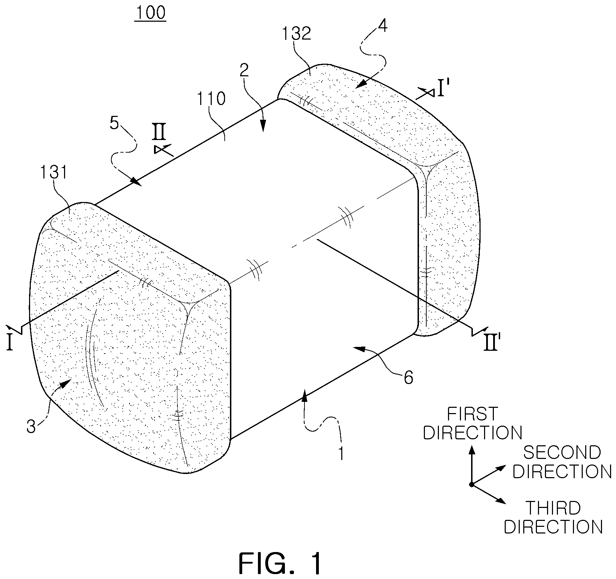

FIG. 1 is a perspective diagram illustrating a multilayer electronic component according to an embodiment.

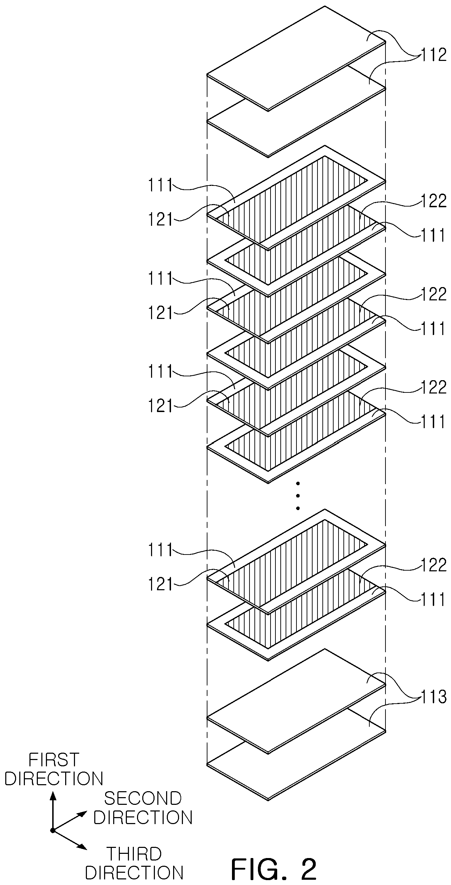

FIG. 2 is an exploded perspective diagram illustrating a lamination structure of an internal electrode according to an embodiment.

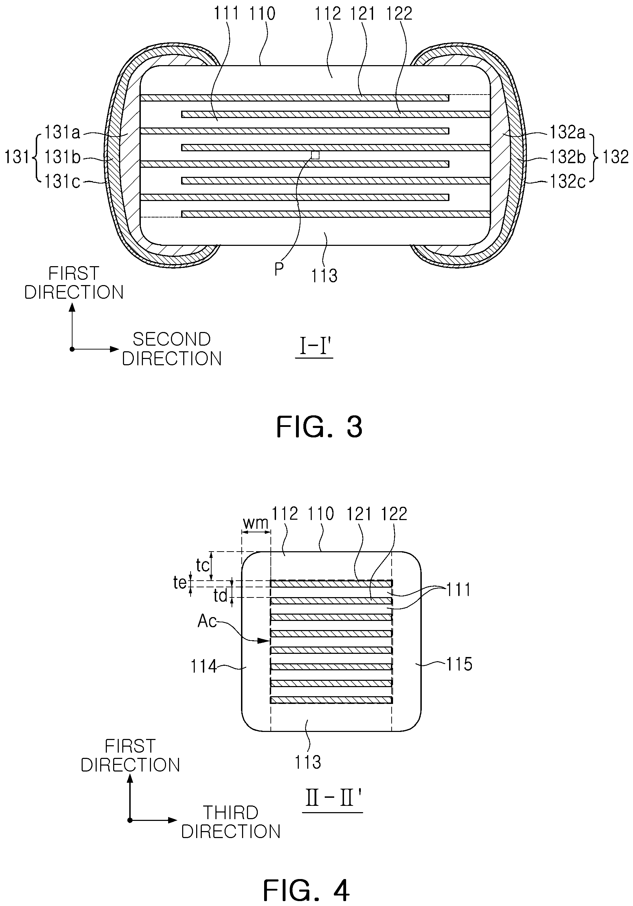

FIG. 3 is a cross-sectional diagram taken along line I-I' in FIG. 1.

FIG. 4 is a cross-sectional diagram taken along line II-II' in FIG. 1.

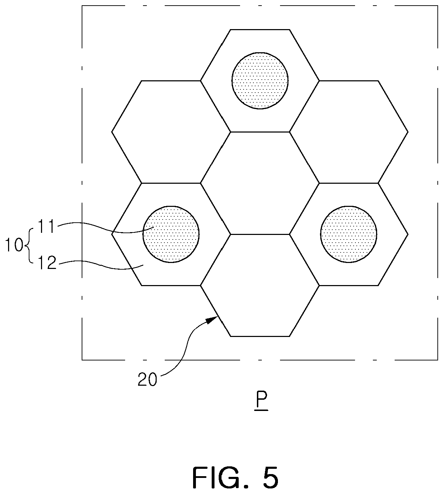

FIG. 5 is an enlarged diagram illustrating region P in FIG. 3.

Hereinafter, a multilayer electronic component according to an embodiment will be described in greater detail with reference to FIGS. 1 to 5. A multilayer ceramic capacitor will be described as an example of a multilayer electronic component, but an embodiment thereof is not limited thereto, and the multilayer ceramic capacitor may be applied to various multilayer electronic components, such as an inductor, a piezoelectric element, a varistor, or a thermistor.

A multilayer electronic component 100 according to an embodiment may include a body 110 including a dielectric layer 111 and internal electrodes 121 and 122; and external electrodes 131 and 132 disposed on the body 110, wherein the dielectric layer may include acceptor elements including vanadium (V), donor elements including rare earth elements, and titanium (Ti), and when the number of moles of the acceptor elements per 100 moles of titanium (Ti) is defined as Am, the number of moles of the donor elements per 100 moles of titanium (Ti) is defined as Dm, and the number of moles of vanadium (V) per 100 moles of titanium (Ti) is defined as Vm, 1.2 ≤ Dm/Am ≤ 1.4 and 0.2 ≤ Vm/Dm may be satisfied..

The body 110 may have the dielectric layers 111 and the internal electrodes 121 and 122 alternately laminated.

More specifically, the body 110 may include a capacitance forming portion Ac disposed in the body 110 and forming capacitance including the first internal electrode 121 and the second internal electrode 122 alternately disposed to face each other with the dielectric layer 111 interposed therebetween.

The shape of the body 110 may not be limited to any particular shape, but as illustrated, the body 110 may have a hexahedral shape or a shape similar to a hexahedral shape. Due to reduction of ceramic powder included in the body 110 during a firing process, the body 110 may not have an exactly hexahedral shape formed by linear lines but may have a substantially hexahedral shape.

The body 110 may have first and second surfaces 1 and 2 opposing each other in the first direction, third and fourth surfaces 3 and 4 connected to the first and second surfaces 1 and 2 and opposing in the second direction, and fifth and sixth surfaces 5 and 6 connected to the first to fourth surfaces 1, 2, 3, and 4 and opposing each other in the third direction.

The plurality of dielectric layers 111 forming the body 110 may be in a fired state, and a boundary between the adjacent dielectric layers 111 may be integrated with each other such that the boundary therebetween may not be distinct without using a scanning electron microscope (SEM).

The raw material forming the dielectric layer 111 is not limited as long as sufficient capacitance may be obtained, and generally, perovskite (ABO₃) material may be used, and for example, a barium titanate material, a lead composite perovskite material, or a strontium titanate material may be used. A barium titanate material may include BaTiO3-based ceramic particles, and an example of the ceramic powder may include BaTiO₃, (Ba₁₋ₓCaₓ)TiO₃ (0<x<1), Ba(Ti_{1-y}Ca_{y})O₃ (0<y<1), (Ba₁₋ₓCaₓ) (Ti_{1-y}Zr_{y})O₃ (0<x<1, 0<y<1) or Ba (Ti_{1-y}Zr_{y})O₃ (0<y<1) in which Ca (calcium) and Zr (zirconium) are partially dissolved.

As for the raw materials forming the dielectric layer 111, various ceramic additives, organic solvents, binders, dispersants, or the like, may be added.

A dielectric of high capacitance BME MLCC currently used, such as X5R, X7R, X8R, and Y5V may be based on a material obtained by co-doping fixed valence acceptor elements such as Mg and Al and rare earth elements acting as donors such as Y, Dy, Ho, and Er with a BaTiO3 base material or a base material such as (Ba₁₋ₓCaₓ)(Ti_{1-y}Ca_{y})O₃, (Ba₁₋ₓCaₓ)(Ti_{1-y}Zr_{y}) O₃, Ba(Ti_{1-y}Zr_{y})O₃ modified by Ca Zr solid-solute therein, further adding variable valence acceptor elements such as Mn, V, Cr, extra Ba, and SiO₂ or a sintering aid including the same, and sintering the material. When firing in a reducing atmosphere, to implement the normal capacitance and insulating properties of high capacitance MLCC, grain growth suppression and reduced resistance may need to be implemented, and it is known that the two effects may be implemented by adding an appropriate amount of fixed valence acceptor elements such as Mg. However, when only fixed valence acceptor elements such as Mg are added, withstand voltage properties and reliability of the dielectric may be poor, and by adding both transition metal elements and rare earth elements, which are variable valence acceptor elements such as Mn and V, the effect of improvement of withstand voltage and reliability may be improved. Most of the elements may be co-doped and may be solid-solute in a shell region of BaTiO₃ base material grains and may form a core-shell structure, such that stable capacitance properties and reliability depending on the temperature of the multilayer electronic component may be implemented.

In the multilayer electronic component 100 according to an embodiment, the dielectric layer 111 may include acceptor elements including vanadium (V), donor elements including rare earth elements, and titanium (Ti), and when the number of moles of the acceptor elements per 100 moles of titanium (Ti) is Am, the number of moles of the donor elements per 100 moles of titanium (Ti) is defined as Dm, and the number of moles of vanadium (V) per 100 moles of titanium (Ti) is defined as Vm, 1.2 ≤ Dm/Am ≤ 1.4 and 0.2 ≤ Vm/Dm may be satisfied.

Here, rare earth elements acting as donor elements may include at least one of dysprosium (Dy), terbium (Tb), yttrium (Y), holmium (Ho), erbium (Er), gadolinium (Gd), cerium (Ce), neodymium (Nd), samarium (Sm) and thulium (Tm), preferably at least one of dysprosium (Dy) and terbium (Tb), and more preferably at least one of dysprosium (Dy) and terbium (Tb).

The rare earth elements may suppress the movement of oxygen vacuums, and by suppressing the movement of oxygen vacuums, deterioration of insulation resistance may be prevented such that reliability may improve.

Also, the acceptor elements may include vanadium (V), and may further include at least one of magnesium (Mg), aluminum (Al), manganese (Mn), chromium (Cr), iron (Fe), nickel (Ni), cobalt (Co), copper (Cu) and zinc (Zn), may further include at least one of magnesium (Mg), aluminum (Al), and manganese (Mn) preferably, and may be at least one of magnesium (Mg), aluminum (Al), and manganese (Mn) more preferably.

The acceptor elements may provide reduction resistance, and vanadium (V) among the acceptor elements may effectively satisfy X5R properties.

As the number of moles Dm of the donor elements, the number of moles Am of the acceptor elements, and the number of moles Vm of vanadium (V), per 100 moles of titanium (Ti) included in the dielectric layer 111, satisfy 1.2 ≤ Dm/Am ≤ 1.4 and 0.2 ≤ Vm/Dm, X5R properties (capacitance in the temperature range of -55 °C-85 °C is -15 % or higher +15 % or lower compared to capacitance at 25 °C) may be satisfied, or reliability of the multilayer electronic components may be improved.

When the Dm/Am ratio is less than 1.2 (Dm/Am < 1.2), reliability may be degraded, and when the Dm/Am ratio is greater than 1.4, X5R properties may not be satisfied.

Also, when the ratio of Vm/Dm is less than 0.2, reliability may deteriorate. An upper limit of Vm/Dm is not limited to any particular example to satisfy reliability or X5R properties, and the number of moles Vm of vanadium (V) per 100 moles of titanium (Ti) included in the dielectric layer 111 may satisfy the condition of more than 0 mole and 1.0 moles or lower, that is, 0 mole < Vm ≤ 1.0 moles.

In this case, when the number of moles Vm of vanadium (V) exceeds 1.0 moles, reliability may be reduced.

The dielectric layer 111 according to an embodiment may include dielectric grains 10 having a core-shell structure, and the area fraction of a core 11 with respect to the area of the dielectric grains 10 having a core-shell structure may be 60% or higher.

To improve reliability, an upper limit value of the area fraction of core 11 is not limited to any particular example, and may be 95% or lower, 90% or lower, or 850 or lower, and to obtain improved capacitance properties, an upper limit value of the area fraction of the core 11 may be 80% or lower.

In embodiments, the dielectric layer 111 may include a plurality of dielectric grains, and the plurality of dielectric grains may include dielectric grains 10 having a core-shell structure and dielectric grains 20 not having a core-shell structure.

Also, the dielectric grains 10 having a core-shell structure may have a structure including the core 11 on an inner side and a shell 12 surrounding the core 11, wherein the core 11 may indicate a region in which rare earth elements are not detected, for example, may indicate a region in which the atomic percentage of rare earth elements is 0 at%. Also, the shell 12 may indicate a region in which the atomic percentage of rare earth elements is, for example, greater than 0 at% and 0.5 at% or lower

As an example of a specific method of measuring the content of each element included in the dielectric layer 111 or the dielectric grains, in the case of the destruction method, the components of the dielectric layer in a central portion of the chip may be analyzed using a measuring device such as SEM-EDS, TEM-EDS, or STEM-EDS. First, a thinly sliced analysis sample may be prepared using focused ion beam (FIB) device in the region including a dielectric microstructure such as a dielectric grain in a cross-section of the dielectric material which has been sintered. Thereafter, the damaged layer on the surface of the thinned sample may be removed using xenon (Xe) or argon (Ar) ion milling, and qualitative/quantitative analysis may be performed by mapping each component to be measured in the image obtained using SEM-EDS, TEM-EDS, or STEM-EDS. In this case, the qualitative/quantitative analysis graph of each component may be represented in terms of mass percentage (wt%), atomic percentage (at%), or moles percentage (mol%) of each element.

As another method, the chip may be pulverized, the internal electrode may be removed, the dielectric layer portion may be selected, and the components of the dielectric layer may be analyzed using a device such as an inductively coupled plasma spectrometer (ICP-OES) and inductively coupled plasma mass analyzer (ICP-MS).

When the area fraction of core 11 relative to the area of dielectric grains 10 having a core-shell structure satisfies 60% or higher, the target dielectric properties may be satisfied, X5R properties may be satisfied, or reliability of the multilayer electronic component may be improved.

When the area fraction of core 11 relative to the area of dielectric grains 10 having a core-shell structure is less than 60%, it may be difficult to implement the target dielectric properties or to satisfy the X5R properties.

The method of calculating the area fraction of the core 11 relative to the area of dielectric grains 10 having a core-shell structure is not limited to any particular example, and may be as below. For example, an image of a cross-section of the dielectric layer may be obtained using an SEM, TEM, or STEM measurement device, and each component may be observed in EDS mode. In this case, each component may be observed such that the total number of pixels may be 100,000 or more, and when a pixel in which a content of rare earth elements is 0 at% is defined as a core, and a pixel in which a content of rare earth elements is greater than 0 at% and 0.5 at% or lower is defined as a shell, the number of pixels in which the content of rare earth elements is 0 at% relative to the total number of pixels may be calculated, which may be defined as the area fraction of the core relative to the area of dielectric grains of the core-shell structure.

The number of pixels in which the content of rare earth elements is 0 at% in regions other than the core may be negligible, but when the number of pixels in which the content of rare earth elements is 0 at% in regions other than the core increases, the fraction of the core may be obtained by selecting only pixels disposed in the grains of the core-shell structure or in the central portion of the grains of the core-shell structure among pixels in which the content of rare earth elements is 0 at% in regions other than the core.

A thickness td of the dielectric layer 111 may not be limited to any particular example.

However, to ensure reliability of the multilayer electronic component 100 in a high voltage environment, the thickness of the dielectric layer 111 may be 10.0 µm or less. Also, to implement miniaturization and high capacitance of the multilayer electronic component 100, the thickness of the dielectric layer 111 may be 3.0 um or less. To easily implement ultra-miniaturization and high capacitance, the thickness of the dielectric layer 111 may be 1.0 um or less, preferably 0.6 um or less, and more preferably 0.4 um or less.

Here, the thickness td of dielectric layer 111 may indicate the thickness td of at least one of the plurality of dielectric layer 111.

Also, the thickness td of the dielectric layer 111 may indicate the thickness td of the dielectric layer 111 disposed between the first and second internal electrodes 121 and 122.

The thickness td of the dielectric layer 111 may refer to the size, in the first direction, of the dielectric layer 111. Also, the thickness td of the dielectric layer 111 may refer to the average thickness td of the dielectric layer 111 and may refer to the average size, in the first direction, of the dielectric layer 111.

The average size, in the first direction, of the dielectric layer 111 may be measured by scanning a cross-section in the first and second directions of the body 110 using a scanning electron microscope (SEM) with a magnification of 10,000. More specifically, the average size, in the first direction, of the dielectric layer 111 may indicate the average value calculated by measuring the sizes, in the first direction, of the dielectric layer 111 at 10 points at an equal distance in the second direction in the scanned image. The 10 points at an equal distance may be specified in the capacitance formation portion Ac. Also, by extending the measurement of the average value to 10 dielectric layers 111, the average size, in the first direction, of the dielectric layer 111 may be further generalized.

The internal electrodes 121 and 122 may be alternately laminated with the dielectric layer 111.

The internal electrodes 121 and 122 may include a first internal electrode 121 and a second internal electrode 122, the first and second internal electrodes 121 and 122 may be alternately disposed to face each other with the dielectric layer 111 included in the body 110 interposed therebetween, and may be exposed to the third and fourth surfaces 3 and 4 of the body 110, respectively.

More specifically, the first internal electrode 121 may be spaced apart from the fourth surface 4 and may be exposed through the third surface 3, and the second internal electrode 122 may be spaced apart from the third surface 3 and may be exposed through the fourth surface 4. The first external electrode 131 may be disposed on the third surface 3 of the body 110 and may be connected to the first internal electrode 121, and the second external electrode 132 may be disposed on the fourth surface 4 of the body 110 and may be connected to the second internal electrode 122.

That is, the first internal electrode 121 may not be connected to the second external electrode 132 and may be connected to the first external electrode 131, and the second internal electrode 122 may not be connected to the first external electrode 131 and may be connected to the second external electrode 132. In this case, the first and second internal electrodes 121 and 122 may be electrically separated from each other by the dielectric layer 111 disposed therebetween.

The body 110 may be formed by alternately laminating ceramic green sheets on which the first internal electrodes 121 are printed and ceramic green sheets on which the second internal electrodes 122 are printed, and firing the sheets.

The material for forming the internal electrodes 121 and 122 is not limited to any particular example, and a material having excellent electrical conductivity may be used. For example, the internal electrodes 121 and 122 may include one or more of nickel (Ni), copper (Cu), palladium (Pd), silver (Ag), gold (Au), platinum (Pt), tin (Sn), tungsten (W), titanium (Ti), and alloys thereof.

Also, the internal electrodes 121 and 122 may be formed by printing conductive paste for internal electrodes including one or more of nickel (Ni), copper (Cu), palladium (Pd), silver (Ag), gold (Au), platinum (Pt), tin (Sn), tungsten (W), titanium (Ti), and alloys thereof on a ceramic green sheet. A screen printing method or a gravure printing method may be used as a method of printing the conductive paste for internal electrodes, but an embodiment thereof is not limited thereto.

The thickness te of the internal electrodes 121 and 122 may not be limited to any particular example.

However, to ensure reliability of the multilayer electronic component 100 in a high voltage environment, the thickness te of the internal electrodes 121 and 122 may be 3.0 µm or less. Also, to implement miniaturization and high capacitance of the multilayer electronic component 100, the thickness of the internal electrodes 121 and 122 may be 1.0 µm or less. To easily implement ultra-miniaturization and high capacitance, the thickness of the internal electrodes 121 and 122 may be 0.6 um or less, and more preferably 0.4 um or less.

Here, the thickness te of the internal electrodes 121 and 122 may indicate the thickness te of at least one of the plurality of internal electrodes 121 and 122.

Also, the thickness te of the internal electrodes 121 and 122 may indicate the size of the internal electrodes 121 and 122 in the first direction. Also, the thickness te of internal electrodes 121 and 122 may indicate the average thickness te of internal electrodes 121 and 122, and may indicate the average size of internal electrodes 121 and 122 in the first direction.

The average size, in the first direction, of the internal electrodes 121 and 122 may be measured by scanning a cross-section of the body 110 using a scanning electron microscope (SEM) with a magnification of 10,000X. More specifically, an average value may be measured from the sizes, in the first direction, of the internal electrode at 10 points at an equal distance in the second direction in the scanned image. The 10 points at an equal distance may be designated in the capacitance formation portion Ac. Also, by extending the measurement of the average value to 10 internal electrodes, the average size of the internal electrodes 121 and 122 may be further generalized.

In an embodiment, the average thickness td of at least one of the plurality of dielectric layers 111 and the average thickness te of at least one of the plurality of internal electrodes 121 and 122 may satisfy 2×te < td.

In other words, the average thickness td of the dielectric layer 111 may be greater than twice the average thickness te of one of the internal electrodes 121 and 122. Preferably, the average thickness td of the plurality of dielectric layers 111 may be greater than twice the average thickness te of the plurality of internal electrodes 121 and 122.

Generally, a high-voltage electronic component may have an issue in terms of reliability due to a decrease in breakdown voltage (BDV) in a high-voltage environment.

Accordingly, to prevent a decrease in breakdown voltage under a high voltage environment, by configuring the average thickness td of the dielectric layer 111 to be larger than twice the average thickness te of the internal electrodes 121 and 122, the thickness of the dielectric layer, which is the distance between the internal electrodes, may be increased and breakdown voltage properties may be improved.

When the average thickness td of the dielectric layer 111 is less than twice the average thickness te of the internal electrodes 121 and 122, the average thickness of the dielectric layer, which is the distance between the internal electrodes, may be reduced such that the breakdown voltage may decrease, and a short may occur between the internal electrodes.

The body 110 may include cover portions 112 and 113 disposed on both end-surfaces of the capacitance forming portion Ac in the first direction.

More specifically, the body 110 may include a first cover portion 112 disposed on one surface in the first direction of the capacitance formation portion Ac and a second cover portion 113 disposed on the other surface in the first direction of the capacitance formation portion Ac. More specifically, the body 110 may include the upper cover portion 112 disposed in the upper portion in the first direction of the capacitance formation portion Ac and the lower cover portions 113 disposed in the lower portion in the first direction of the capacitance formation portion Ac.

The upper cover portion 112 and the lower cover portion 113 may be formed by laminating a single dielectric layer 111 or two or more dielectric layers 111 on the upper and lower surfaces of the capacitance forming portion Ac in the first direction, and may prevent damages to the internal electrodes 121 and 122 due to physical or chemical stress.

The upper cover portion 112 and the lower cover portion 113 may not include the internal electrodes 121 and 122 and may include the same material as that of the dielectric layer 111. That is, the upper cover portion 112 and the lower cover portion 113 may include a ceramic material, for example, a barium titanate (BaTiO₃) ceramic material.

The thickness tc of the cover portion 112 and 113 may not be limited to any particular example.

However, to easily implement miniaturization and high capacitance of multilayer electronic components, the thickness tc of the cover portions 112 and 113 may be 100 um or less, preferably 30 um or less. More preferably, the thickness may be 20 um or less in an ultra-small product.

Here, the thickness tc of the cover portion 112 or 113 may refer to the size, in the first direction, of the cover portion 112 or 113. Also, the thickness tc of the cover portions 112 and 113 may refer to the average thickness tc of the cover portions 112 and 113, and may refer to the average size, in the first direction, of the cover portions 112 and 113.

The average size of the cover portions 112 and 113 may be measured by scanning a cross-section in the first and second directions of the body 110 using a scanning electron microscope (SEM) at a magnification of 10,000. More specifically, the average size may indicate the average value calculated by measuring the sizes, in the first direction, at 10 points at an equal distance in the second direction in the scanned image of the cover portion.

Also, the average size, in the first direction, of the cover portion measured by the above method may be substantially the same as the average size, in the first direction, of the cover portion in the cross-section in the first and third directions of the body 110.

The multilayer electronic component 100 may include side margin portions 114 and 115 disposed on both end-surfaces in the third direction of the body 110.

More specifically, the side margin portions 114 and 115 may include a first side margin portion 114 disposed on the fifth surface 5 and a second side margin portion 115 disposed on the sixth surface 6 of the body 110.

As illustrated, the side margin portions 114 and 115 may refer to a region between both end-surfaces in the third direction of the first and second internal electrodes 121 and 122 and the boundary surface of the body 110 with respect to the cross-section in the first and third directions of the body 110.

The side margin portions 114 and 115 may be formed by forming internal electrodes 121 and 122 on a ceramic green sheet by applying a conductive paste other than the region in which the side margin portions 114 and 115 are formed, cutting the laminated internal electrodes 121 and 122 to expose the fifth and sixth surfaces 5 and 6 of the body 110 to prevent a step difference caused by the internal electrodes 121 and 122, and laminating a single dielectric layer 111 or two or more dielectric layers 111 in the third direction on both end-surfaces in the third direction of the capacitance forming portion Ac.

The side margin portions 114 and 115 may prevent damages to the internal electrodes 121 and 122 due to physical or chemical stress.

The first side margin portion 114 and the second side margin portion 115 may not include the internal electrodes 121 and 122 and may include the same material as that of the dielectric layer 111. That is, the first side margin portion 114 and the second side margin portion 115 may include a ceramic material, for example, a barium titanate (BaTiO₃) ceramic material.

The width wm of the first and second side margin portions 114 and 115 may not be limited to any particular example.

However, to easily implement miniaturization and high capacitance of the multilayer electronic component 100, the width wm of the side margin portions 114 and 115 may be 100 um or less, preferably 30 um or less, and may be more preferably 20 um or less in an ultra-small product.

Here, the width wm of the side margin portions 114 and 115 may refer to the size of the side margin portions 114 and 115 in the third direction. Also, the width wm of the side margin portions 114 and 115 may refer to the average width wm of the side margin portions 114 and 115, and the average size in the third direction of the side margin portions 114 and 115.

The average size in the third direction of the side margin portion 114 and 115 may be measured by scanning a cross-section in the first and third directions of the body 110 using a scanning electron microscope (SEM) at a magnification of 10,000. More specifically, the average size may be an average value measured from the sizes in the third direction at 10 points at an equal distance in the first direction in the scanned image of one of the side margin portions.

In an embodiment, the ceramic electronic component 100 may have two external electrodes 131 and 132, but the number of the external electrodes 131 and 132 or the shape thereof may be varied depending on the forms of the internal electrode 121 and 122 or other purposes.

The external electrodes 131 and 132 may be disposed on the body 110 and may be connected to the internal electrodes 121 and 122.

More specifically, the external electrodes 131 and 132 may be disposed on the third and fourth surfaces 3 and 4 of the body 110, respectively, and may include first and second external electrodes 131 and 132 connected to the first and second internal electrodes 121 and 122, respectively. That is, the first external electrode 131 may be disposed on the third surface 3 of the body and may be connected to the first internal electrode 121, and the second external electrode 132 may be disposed on the fourth surface 4 of the body and may be connected to the second internal electrode 122.

Also, the external electrodes 131 and 132 may extend and be disposed on portions of the first and second surfaces 1 and 2 of the body 110, or may extend and be disposed on a portion of the fifth and sixth surfaces 5 and 6 of the body 110. That is, the first external electrode 131 may be disposed on a portion of the first, second, fifth, and sixth surfaces 1, 2, 5, and 6 of the body 110, and the third surface 3 of the body 110, and the second external electrode 132 may be disposed on a portion of the first, second, fifth, and sixth surfaces 1, 2, 5, and 6 of the body 110, and the third surface 3 of the body 110.

The external electrodes 131 and 132 may be formed of any material having electrical conductivity, such as metal, and a specific material may be determined in consideration of electrical properties and structural stability, and the external electrodes 131 and 132 may have a multilayer structure.

For example, the external electrodes 131 and 132 may include an electrode layer disposed on the body 110 and a plating layer disposed on the electrode layer.

For a more specific example of the electrode layer, the electrode layer may include first electrode layers 131a and 132a, which may be fired electrodes including a first conductive metal and glass, or second electrode layers 131b and 132b, which may be resin-based electrodes including second conductive metal and resin.

Here, the conductive metal included in the first electrode layers 131a and 132a may be referred to as a first conductive metal, and the conductive metal included in the second electrode layers 131b and 132b may be referred to as a second conductive metal. In this case, the first conductive metal and second conductive metal may be the same or different from each other, and when a plurality of conductive metals are included, only a portion thereof may include the same conductive metal, but an embodiment thereof is not limited thereto.

Also, the electrode layers 131a and 132a, 131b, and 132b may be formed by forming a fired electrode and a resin-based electrode on the body 110 in order.

Also, the electrode layers 131a and 132a, 131b, and 132b may be formed by transferring a sheet including a conductive metal onto the body, or may be formed by transferring a sheet including a conductive metal onto the fired electrode.

A material having excellent electrical conductivity may be used as a conductive metal included in the electrode layers 131a and 132a, 131b, and 132b. For example, the conductive metal may include one or more selected from a group consisting of nickel (Ni), copper (Cu), palladium (Pd), silver (Ag), gold (Au), platinum (Pt), tin (Sn), tungsten (W), titanium (Ti) and alloys thereof, but an embodiment thereof is not limited thereto.

In an embodiment, the electrode layers 131a and 132a, 131b, and 132b may have a two-layer structure including the first electrode layers 131a and 132a and the second electrode layers 131b and 132b, and accordingly, the external electrodes 131 and 132 may include first electrode layers 131a and 132a including a first conductive metal and glass, and second electrode layers 131b and 132b disposed on the first electrode layers 131a and 132a and including a second conductive metal and resin.

The first electrode layers 131a and 132a may improve bondability with the body 110 by including glass, and the second electrode layers 131b and 132b may improve warpage strength by including resin.

The first conductive metal included in the first electrode layers 131a and 132a is not limited to any particular example as long as the material may be electrically connected to the internal electrodes 121 and 122 to form capacitance, and for example, the first conductive metal may include one or more selected from a group consisting of nickel (Ni), copper (Cu), palladium (Pd), silver (Ag), gold (Au), platinum (Pt), tin (Sn), tungsten (W), titanium (Ti) and alloys thereof.

The first electrode layers 131a and 132a may be formed by applying a conductive paste prepared by adding glass frit to the first conductive metal particles and firing the paste.

The second conductive metal included in the second electrode layers 131b and 132b may allow the layers to be electrically connected to the first electrode layers 131a and 132a.

The conductive metal included in the second electrode layers 131b and 132b is not limited to any particular example as long as the material may be electrically connected to the electrode layers 131a and 132a, and may include one or more selected from a group consisting of nickel (Ni), copper (Cu), palladium (Pd), silver (Ag), gold (Au), platinum (Pt), tin (Sn), tungsten (W), titanium (Ti) and alloys thereof.

The second conductive metal included in the second electrode layers 131b and 132b may include one or more of spherical particles and flake-type particles. In other words, the conductive metal may only include flake-type particles, only spherical particles, or may be a mixture of flake-type particles and spherical particles. Here, spherical particles may include shapes not completely spherical, for example, shapes in which the length ratio (major axis/minor axis) between the major axis and the minor axis is 1.45 or higher. Flake-type particles may refer to particles having a flat and elongated shape, and are not limited to any particular example, and for example, a length ratio of the major axis between the minor axis (major axis/minor axis) may be 1.95 or more. The length of the major axis and the minor axis of the spherical particles and the flake-type particles may be measured from an image obtained by scanning the cross-sections in first and second direction of the central portion in the third direction of the multilayer electronic component using a scanning electron microscope (SEM).

The resin included in the second electrode layers 131b and 132b may secure bondability and may absorb impacts. The resin included in the second electrode layers 131b and 132b is not limited to any particular example as long as the resin has bondability and impact absorption properties and may be mixed with second conductive metal particles to create a paste, and may include, for example, an epoxy resin

Also, the second electrode layers 131b and 132b may include a plurality of metal particles, an intermetallic compound and resin. By including an intermetallic compound, electrical connectivity with the first electrode layers 131a and 132a may be improved. The intermetallic compound may improve electrical connectivity by connecting a plurality of metal particles to each other, and may surround a plurality of metal particles and may connect the metal particles to each other.

In this case, the intermetallic compound may include a metal having a melting point lower than a curing temperature of resin. That is, as the intermetallic compound may include a metal having a melting point lower than the curing temperature of resin, the metal having a melting point lower than the curing temperature of the resin may melt during a drying and curing process, may form an intermetallic compound with a portion of the metal particles and may surround the metal particles. In this case, the intermetallic compound may include a low melting point metal, preferably below 300 °C.

For example, Sn having a melting point of 213-220 °C may be included. During the drying and hardening process, Sn may be melted, and the melted Sn may wet metal particles at high melting points such as Ag, Ni, or Cu by capillary action, may react with a portion of Ag, Ni or Cu metal particles and may form intermetallic compounds such as Ag₃Sn, Ni₃Sn₄, Cu₆Sn₅, or Cu₃Sn. Ag, Ni or Cu not participating in the reaction may remain in the form of metal particles.

Accordingly, the plurality of metal particles may include one or more of Ag, Ni and Cu, and the intermetallic compound may include one or more of Ag₃Sn, Ni₃Sn₄, Cu₆Sn₅ and Cu₃Sn.

The plating layers 131c and 132c may improve mounting properties.

The type of the plating layers 131c and 132c is not limited to any particular example, and the plating layers 131c and 132c may be single-layer plating layers 131c and 132c including at least one of nickel (Ni), tin (Sn), palladium (Pd), and alloys thereof, and may be formed in a plurality of layers.

For a more specific example of the plating layers 131c and 132c, the plating layers 131c and 132c may be Ni plating layers or Sn plating layers, and Ni plating layers and Sn plating layers may be formed in order on the electrode layers, and a Sn plating layer, a Ni plating layer, and a Sn plating layer may be formed in order. Also, the plating layers 131c and 132c may include a plurality of Ni plating layers and/or a plurality of Sn plating layers.

The size of the multilayer electronic component 100 may not be limited to any particular example.

However, to implement both miniaturization and high capacitance, the number of laminates may need to be increased by reducing the thickness of the dielectric layer and the internal electrode, such that the effect described in the embodiments may be noticeable in the multilayer electronic component 100 having a size of 1005 (length × width: 1.0 mm × 0.5 mm) or less.

Here, the multilayer electronic component 100 of size 1005 or less may indicate that the average length of the multilayer electronic component may be 1.0 mm or less and the average width may be 0.5 mm or less, but an example embodiment thereof is not limited thereto, and an error of approximately 5% may be included.

### (Test example)

As for example 1, donor elements including rare earth elements such as dysprosium (Dy) and terbium (Tb) and additives including acceptor elements such as vanadium (V), aluminum (Al), magnesium (Mg), and manganese (Mn), ethanol, toluene, dispersant were added to and mixed with a dielectric raw material powder including barium titanate (BaTiO₃) powder having a size of about 100 nm to 300 nm, thereby preparing dielectric slurry, and a ceramic green sheet was prepared by applying dielectric slurry on a carrier film and drying the slurry.

In this case, the elements were weighed and added such that the ratio of the number of moles Dm of the donor element to the number of moles Am of the acceptor element (Dm/Am) per 100 moles of barium titanate (BaTiO₃) became 1.2, and also such that the ratio of the number of moles Vm of the vanadium (V) element to the number of moles Dm of the donor element (Vm/Dm) became 0.27.

Thereafter, an internal electrode pattern was formed by applying conductive paste for internal electrode on the ceramic green sheet, and was repeatedly laminated to form a laminate, and the laminate was pressed and cut. Thereafter, the cut laminate was heated to remove the binder and was fired in a reducing atmosphere of high temperature to form a ceramic body.

In the firing process, firing was performed for approximately 1 hour at a temperature of 1100 °C-1200 °C in a reducing atmosphere (0.1% H₂/99.9% N₂, H₂O/H₂/N₂ atmosphere), re-oxidation was performed in 0.03% H₂ atmosphere for 12 hours and heat treatment was performed.

Thereafter, an external electrode was formed through a termination process and electrode firing using copper (Cu) paste on the fired ceramic body, and a chip was manufactured.

In this case, the thickness of the dielectric layer 111 was configured to be 1.0 um or lower, and the fraction of the core in the dielectric grains having a core-shell structure was configured to be more than 60%.

In comparative example 1, the elements were weighed and added such that the ratio of the number of moles Dm of the donor element to the number of moles Am of the acceptor element (Dm/Am) per 100 moles of barium titanate (BaTiO₃) became less than 1.2, and also such that the ratio of the number of moles Vm of the vanadium (V) element to the number of moles Dm of the donor element (Vm/Dm) became less than 0.2. Other than the content of the added additive, the process of manufacturing the chip was the same as example 1 above.

Highly accelerated life testing (HALT) and temperature coefficient of capacitance (TCC) test were performed on example 1 and comparative example 1.

In highly accelerated life testing (HALT), a temperature condition of 105 °C and a voltage condition of 100 V were applied for 100 hours, and a chip in which a short occurred was considered defective.

The TCC properties graph indicates capacitance change rate at -55 °C (%) and capacitance change rate at 85 °C (%) with respect to capacitance at 25 °C (0%).

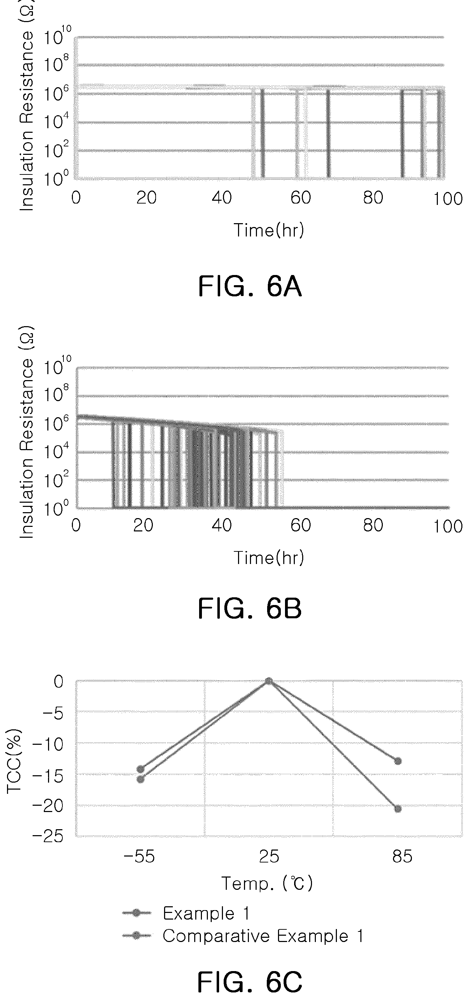

FIG. 6A is a graph of reliability evaluation (HALT) of an example, FIG. 6B is a graph of reliability evaluation (HALT) of a comparative example. FIG. 6C is a graph of TCC properties of an example and a comparative example.

As indicated in FIGS. 6A and 6B, the mean time to failure (MTTF) of example 1 was longer than the mean time to failure (MTTF) of comparative example 1, which denote that reliability was improved when the conditions 1.2 ≤ Dm/Am ≤ 1.4 and 0.2 ≤ Vm/Dm were satisfied.

Also, as indicated in FIG. 6C, in comparative example 1, with respect to the capacitance at 25 °C, the capacitance change rate at -55 °C was measured as -15.83%, and the capacitance change rate at 85 °C was measured as - 20.21%, which did not satisfy X5R properties, whereas in example 1, with respect to the capacitance at 25 °C, the capacitance change rate at -55 °C was measured as -14.83% and the capacitance change rate at 85 °C was measured as - 13.29%, which satisfied the X5R properties. It is thus indicated that, when the conditions 1.2 ≤ Dm/Am ≤ 1.4 and 0.2 ≤ Vm/Dm are satisfied, X5R properties are satisfied.

Thereafter, in comparative example 2, comparative example 3, and example 2 were manufactured, a cross-section of a dielectric layer of each example was observed with EDS, and it was measured whether the TCC properties (X5R) depending on the fraction of the core were satisfied.

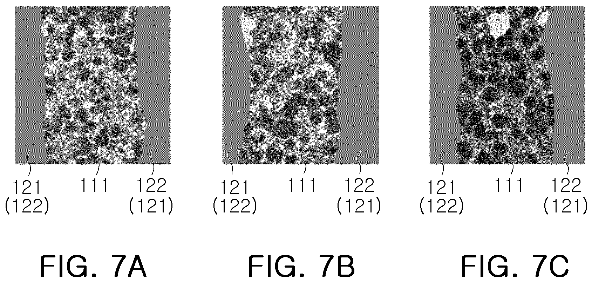

More specifically, FIG. 7A is an image of dysprosium (Dy) in a cross-section of a dielectric layer of a comparative example, observed by using TEM-EDS. FIG. 7B is an image of dysprosium (Dy) in a cross-section of a dielectric layer of another comparative example, observed by using TEM-EDS, and FIG. 7C is an image of dysprosium (Dy) in a cross-section of a dielectric layer of an embodiment, observed by using TEM-EDS.

In comparative example 2, the total number of pixels was 156,228, the number of pixels in the core was 59,308, and the fraction of the core was approximately 38%. In comparative example 3, the total number of pixels was 154,186, the number of pixels in the core was 62,246, and the core fraction was approximately 40%. In example 2, the total number of pixels was 148,050, the number of core pixels was 90,818, and the core fraction was approximately 61%. Here, the area fraction of the core was calculated by defining the pixel in which an atomic percentage of dysprosium (Dy) was 0 at% as the pixel of the region corresponding to the core.

In this case, the capacitance change rate depending on temperature change was measured for comparative example 2 and example 2. In comparative example 2, with respect to the capacitance at 25 °C, the capacitance change rate at - 55 °C was measured as -15.83% and the capacitance change rate at 85°C was measured as -19.21%, which did not satisfy the X5R properties. In example 2, with respect to the capacitance at 25 °C, the capacitance change rate at -55 °C was measured as -14.83% and the capacitance change rate at 85 °C was measured as -13.19%, which satisfied the X5R properties.

Thus, it is indicated that when the fraction of the core in the dielectric grains having a core-shell structure satisfied 60% or more, the capacitance change rate according to temperature was improved and X5R properties were satisfied.

According to the aforementioned embodiments, X5R properties (TCC properties) of the multilayer electronic component may be satisfied.

Also, reliability of the multilayer electronic component may be improved.

The embodiments do not necessarily limit the scope of the embodiments to a specific embodiment form. Instead, modifications, equivalents and replacements included in the disclosed concept and technical scope of this description may be employed. Throughout the specification, similar reference numerals are used for similar elements.

In the embodiments, the term "embodiment" may not refer to one same embodiment, and may be provided to describe and emphasize different unique features of each embodiment. The suggested embodiments may be implemented do not exclude the possibilities of combination with features of other embodiments. For example, even though the features described in an embodiment are not described in the other embodiment, the description may be understood as relevant to the other embodiment unless otherwise indicated.

Terms used in the present specification are for explaining the embodiments rather than limiting the present invention. Unless explicitly described to the contrary, a singular form may include a plural form in the present specification

While the embodiments have been illustrated and described above, it will be configured as apparent to those skilled in the art that modifications and variations could be made without departing from the scope of the present disclosure as defined by the appended claims.

## Claims

1. A multilayer electronic component, comprising:
a body including a dielectric layer and an internal electrode; and
an external electrode disposed on the body,
wherein the dielectric layer comprises titanium (Ti), acceptor elements including vanadium (V), and donor elements including rare earth elements, and
wherein, when number of moles of the acceptor elements per 100 moles of titanium (Ti) is defined as Am, number of moles of the donor elements per 100 moles of titanium (Ti) is defined as Dm, and number of moles of vanadium (V) per 100 moles of titanium (Ti) is defined as Vm, 1.2 ≤ Dm/Am ≤ 1.4 and 0.2 ≤ Vm/Dm is satisfied.

2. The multilayer electronic component of claim 1, wherein Vm satisfies 0 mole < Vm ≤ 1.0 moles.

3. The multilayer electronic component of claim 1, wherein the rare earth elements include at least one of dysprosium (Dy), terbium (Tb), yttrium (Y), holmium (Ho), erbium (Er), gadolinium (Gd), cerium (Ce), neodymium (Nd), samarium (Sm) and thulium (Tm).

4. The multilayer electronic component of claim 1, wherein the rare earth elements are at least one of dysprosium (Dy) and terbium (Tb).

5. The multilayer electronic component of claim 1, wherein the acceptor elements include at least one of magnesium (Mg), aluminum (Al), manganese (Mn), chromium (Cr), iron (Fe), nickel (Ni), cobalt (Co), copper (Cu) and zinc (Zn) .

6. The multilayer electronic component of claim 1,
wherein the dielectric layer includes dielectric grains having a core-shell structure, and
wherein an area fraction of the core relative to an area of dielectric grains having a core-shell structure is 60% or higher.

7. The multilayer electronic component of claim 6, wherein dielectric grains having a core-shell structure include rare earth elements, and an atomic percentage of the rare earth elements of the shell is greater than 0 at% and 0.5 at% or lower.

8. The multilayer electronic component of claim 1, wherein the dielectric layer includes a barium titanate (BaTiO₃) dielectric material.

9. The multilayer electronic component of claim 1, wherein the body includes a plurality of dielectric layers, and an average thickness of at least one of the plurality of dielectric layers is 1.0 um or lower.

10. The multilayer electronic component of claim 1, wherein the body includes a plurality of internal electrodes, and an average thickness of at least one of the plurality of internal electrodes is 0.6 um or lower.

11. The multilayer electronic component of claim 1, wherein an average length of the multilayer electronic component is 1.0 mm or lower, and an average width thereof is 0.5 mm or lower.
